# FASCICULE DE BREVET EUROPEEN

(11) **EP 3 044 450 B1**
(45) Date de publication et mention de la délivrance du brevet: **19.07.2017**
(21) Numéro de dépôt: 14777712.2
(22) Date de dépôt: 05.09.2014
(51) Int. Cl.: F02K 1/48, F02K 1/60, F02K 1/62, F02K 1/76

(54) **ARRIÈRE CORPS DE TURBORÉACTEUR COMPORTANT UNE TUYÈRE ÉQUIPÉE D'UN SYSTÈME D'INVERSION DE POUSSÉE QUI INTÈGRE UNE COURONNE DE CHEVRONS ANTIBRUIT**
HECKTEIL FÜR EIN TURBINENTRIEBWERK MIT EINER DÜSE MIT EINEM SCHUBUMKEHRSYSTEM MIT EINER KRONE AUS GERÄUSCHREDUZIERENDEN CHEVRON-DÜSEN
AFTERBODY FOR A TURBOJET ENGINE COMPRISING A NOZZLE PROVIDED WITH A THRUST REVERSER SYSTEM THAT INCORPORATES A CROWN OF NOISE-REDUCING CHEVRONS

(30) Priorité: 10.09.2013 FR 1302113
(43) Date de publication de la demande: 20.07.2016
(73) Titulaire: Safran Aircraft Engines, 75015 Paris (FR); Safran Nacelles, 76700 Gonfreville-l'Orcher (FR)
(72) Inventeur: KERNEMP, Irwin, F-77550 Moissy-Cramayel Cedex (FR); LANGRIDGE, Jonathan, F-77550 Moissy-Cramayel Cedex (FR); PASCAL, Sébastien, F-77550 Moissy-Cramayel Cedex (FR); GUILLOIS, Denis, F-91470 Limours (FR); CLERE, Gérard, F-92140 Clamart (FR); CHAPELAIN, Loic, F-94320 Thiais (FR)
(74) Mandataire: Gevers & Orès
(86) Numéro de dépôt international: PCT/FR2014/052194
(87) Numéro de publication internationale: WO 2015/036679

(56) Documents cités:
- EP-A2- 1 026 387
- GB-A- 1 435 946
- US-A- 3 568 792
- US-A- 4 147 027

## Description

### Domaine de l'invention :

La présente invention se rapporte au domaine des arrières corps de turboréacteur muni d'inverseurs de poussée. Elle a trait plus particulièrement à l'intégration de chevrons antibruit dans le cas où les portes de l'inverseur de poussée participent à la géométrie de la section de sortie de la tuyère sur l'arrière corps.

### Etat de la technique :

De façon plus spécifique, l'invention concerne un arrière corps, dit de type PERT (de l'acronyme anglo-saxon « Planar Exit Rear Target »), incorporant deux portes présentant chacune un bord amont et un bord aval, par référence au sens d'écoulement des gaz. Ces portes s'étendent en aval jusqu'à la sortie de tuyère et sont chacune montées pivotantes autour d'axes d'articulation entre une position escamotée, laissant le libre passage du jet dans la tuyère, et une position déployée, où le jet vient se défléchir contre elles pour créer une poussée inverse. En position escamotée, les portes contribuent à définir, en association avec deux poutres latérales, la tuyère de l'arrière corps.

On connaît déjà, notamment par le brevet FR2764000, des réalisations d'inverseurs de type PERT pour des tuyères dont la section de sortie est circulaire. Ce type de système assure bien son rôle de freinage, en particulier parce que la cinématique de fermeture de portes avec un bord aval constitué d'une petite partie de la section de sortie circulaire de la tuyère permet d'obturer correctement le canal entre les poutres latérales, lorsque lesdites portes sont déployées. Il est en particulier bien adapté aux turboréacteurs d'avions d'affaires, le plus souvent à flux mélangés.

Cependant, la conception d'un turboréacteur est également soumise à des contraintes de performance acoustique pour différents régimes suivant les conditions de vol (croisière, décollage, atterrissage..). La différence de vitesses entre le jet en sortie de tuyère et l'air externe engendre des cisaillements fluides et donc des turbulences, ce qui provoque du bruit, communément désigné par « bruit de jet ». Ce « bruit de jet » est un bruit large bande, particulièrement gênant lors des phases de décollage de l'avion.

L'utilisation de chevrons placés en couronne à l'extrémité aval de la tuyère est un moyen connu pour diminuer ce bruit dans les phases de vol les plus gênantes. Par exemple, la demande de brevet EP1873389 décrit des chevrons en rappelant l'intérêt de les faire rentrer dans le jet pour atténuer le bruit et mettant en avant la forme du motif de la découpe du bord de fuite. Plus particulièrement, la demande FR2986832 présente, dans le cas d'une forme de tuyère correspondant à un arrière corps de turboréacteur à flux mélangés, une configuration de chevrons à l'intérieur desquels la veine forme un convergent divergent.

Il est donc important de pouvoir intégrer une couronne de chevrons antibruit à un arrière corps de turboréacteur équipé du type PERT. Cependant, comme cela a été évoqué, des chevrons antibruit efficaces déforment fortement la circularité du bord de la section de sortie de la tuyère. Ils forment en particulier des dents sur les bords aval des portes qui vont se rencontrer lorsque celles-ci sont déployées, pouvant ainsi limiter la fermeture du canal entre les poutres latérales et dégrader fortement le rendement de l'inverseur. Un autre inverseur de poussée selon l'art antérieur est connu du document US3568792. La présente invention entend proposer une solution permettant d'utiliser une couronne de chevrons antibruit avec un inverseur de poussée de type PERT en préservant à la fois les performances d'inversion de poussée et la réduction de bruit obtenue par une couronne de chevrons adaptée à la tuyère de l'arrière corps.

### Exposé de l'invention :

Pour répondre à ces objectifs, l'invention concerne un arrière corps de turboréacteur ayant un axe central, équipé d'une tuyère comportant deux portes montées en vis-à-vis entre deux poutres latérales et pivotantes, autour d'axes définissant une direction de pivot, entre une position escamotée, dans laquelle une partie médiane du bord aval des dites portes forme le bord de la section de sortie de la tuyère en association avec les bords aval des deux poutres latérales, et une position déployée, dans laquelle lesdites parties médianes des bords aval des portes pivotantes se rejoignent pour obstruer le canal entre les deux poutres latérales en vue d'inverser la poussée des gaz du turboréacteur, le bord de la section de sortie de la tuyère présentant en outre une couronne de chevrons antibruit alternants avec des échancrures, agencée de telle sorte que chaque chevron antibruit formé sur la partie médiane du bord aval d'une porte pivotante est face à une échancrure de la partie médiane de l'autre porte pivotante dans la direction perpendiculaire à ladite direction de pivot. Cet arrière corps est remarquable ce qu'il est agencé de telle sorte que, lorsque les portes sont en position déployée, les chevrons d'une porte s'imbriquent dans les échancrures de la porte opposée sans chevauchement des bords avals médians des portes.

Comme les parties médianes des bords aval des portes pivotantes ne forment le bord de la section de sortie de la tuyère qu'à partir des extrémités des bords aval des poutres latérales, elles n'occupent qu'un arc de cercle correspondant à un secteur angulaire limité. Donc, en position déployée, ces parties médianes des bords aval des portes ne sont pas trop inclinées l'une par rapport à l'autre, au niveau de leurs extrémités, quand elles se rapprochent autour du même plan, au milieu du canal entre les poutres latérales. Les chevrons n'ont donc pas une incidence trop élevée et le fait de les avoir décalés empêche leur chevauchement. Ces éléments combinés permettent de rapprocher suffisamment les portes pivotantes en position déployée pour que, d'une part, il n'y ait pas de contacts pouvant détruire les chevrons et que, d'autre part, la section de fuite entre les bords des deux portes soit suffisamment faible pour permettre à l'inverseur de créer une contre poussée efficace.

Selon différentes variantes de réalisation de l'invention qui pourront être prises ensemble ou séparément pour aménager la géométrie des chevrons et faciliter le rapprochement des portes sur leur partie médiane:
- la découpe de la couronne de chevrons entre les bords aval des poutres latérales et la partie médiane du bord aval des portes pivotantes se fait à proximité du sommet d'une échancrure ;
- le nombre de chevrons de la couronne est impair ;
- les chevrons placés sur les portes sont symétriques par rapport au plan axial perpendiculaire à ladite direction de pivot.
- la géométrie des chevrons évolue sur la partie médiane du bord aval des portes pivotantes en fonction de leur position en azimut autour de l'axe central par rapport au plan axial perpendiculaire à ladite direction de pivot, de manière a faciliter le rapprochement des bords avals des portes en position déployée ;
- la pénétration des chevrons placés sur la partie médiane du bord aval des portes pivotantes diminue lorsqu'augmente leur distance au plan axial perpendiculaire à ladite direction de pivot ;
- les échancrures et les chevrons antibruit prennent une forme sensiblement triangulaire à sommets arrondis sur les bords avals des portes ;
- la géométrie des chevrons placés au niveau des bords aval des deux poutres latérales diffère de celle des chevrons placés sur la partie médiane du bord aval des portes pivotantes, de manière à rendre les chevrons placés sur les poutres latérales plus performants acoustiquement que les chevrons placés sur les portes pivotantes ;
- la distance séparant les deux points de raccord du bord aval de chaque poutre latérale avec la partie médiane du bord aval des portes pivotantes est au moins égale aux deux tiers de l'écartement maximal entre les parties médianes du bord aval des deux portes pivotantes dans le plan transverse à l'axe passant par lesdits points de raccord.

L'invention concerne également un turboréacteur à flux mélangés comportant un arrière corps présentant les caractéristiques précédentes, et notamment un turboréacteur à flux mélangés comportant en outre un mélangeur à lobes à l'intérieur de la tuyère dans lequel les lobes chauds sont de même nombre que les chevrons antibruit et sont centrés en azimut sur lesdits chevrons.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente une vue schématique d'un turboréacteur indiquant la position de l'inverseur de poussée.
La figure 2 présente schématiquement une vue de côté d'un arrière corps comportant une tuyère à section de sortie circulaire avec l'inverseur de poussée en position fermée.
La figure 3 présente schématiquement une vue d'un arrière corps comportant une tuyère à section de sortie circulaire avec l'inverseur de poussée en position ouverte.
La figure 4 présente schématiquement une vue en perspective de côté d'un arrière corps selon l'invention comportant une tuyère à chevrons antibruit en sortie avec l'inverseur de poussée en position fermée.
La figure 5 présente schématiquement une vue en perspective de l'arrière d'un arrière corps selon l'invention comportant une tuyère à chevrons antibruit en sortie avec l'inverseur de poussée en position ouverte.
La figure 6 présente schématiquement une vue de l'arrière d'un arrière corps selon l'invention comportant une tuyère à chevrons antibruit en sortie avec l'inverseur de poussée en position ouverte.
La figure 7 présente schématiquement une vue en coupe d'un chevron antibruit selon un plan axial passant par le sommet de l'échancrure.
La figure 8 présente schématiquement une vue de dessus d'un chevron antibruit selon une direction radiale passant par le centre du chevron.
La figure 9 présente schématiquement une coupe longitudinale d'un arrière corps de turboréacteur à flux mélangé comportant une tuyère selon l'invention et un mélangeur à lobes.

### Description détaillée de l'invention :

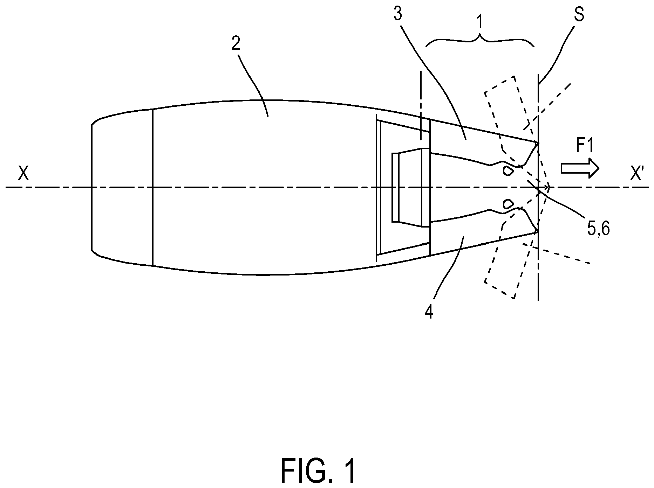

En référence à la figure 1, l'invention concerne l'adaptation de chevrons antibruit sur une tuyère 1 disposée en sortie du moteur 2, d'axe central XX', et équipée d'un système d'inversion de poussée apte à dévier le flux de gaz F1 du moteur. Le système d'inversion de poussée concerné comporte deux portes basculantes, 3 et 4, qui participent à former la géométrie de la tuyère 1 jusqu'au bord de sa section de sortie S en position escamotée, représentée en trait continu, et qui bouchent le canal entre deux poutres latérales 5 et 6, en position ouverte, représentée en trait interrompu.

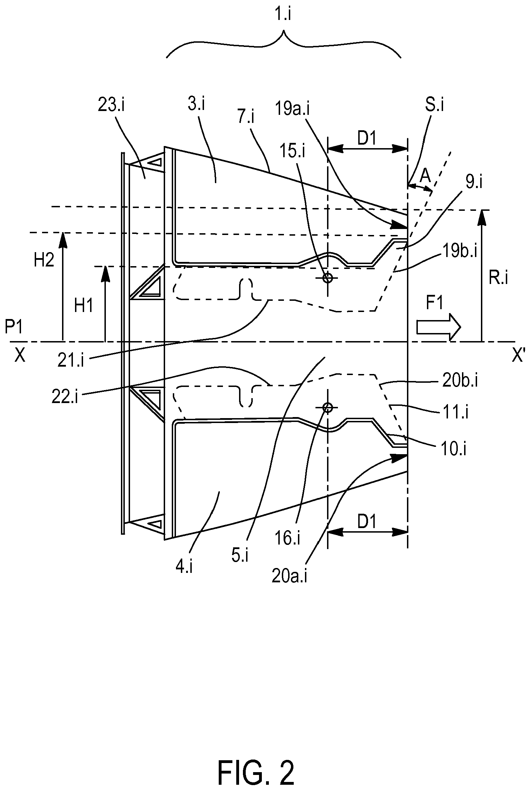

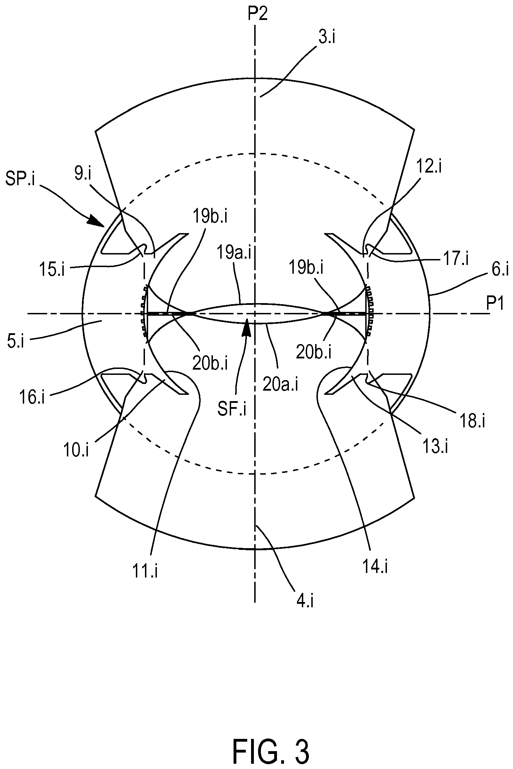

Les figures 2 et 3, tirées du document FR 2764000, présentent le principe de fonctionnement du système d'inversion de poussée PERT sur une tuyère de référence 1.i, sans chevrons antibruit, avec une section de sortie circulaire S.i. La figure 2 montre l'agencement du système d'inversion de poussée en position ouverte. La tuyère 1.i comporte une paroi extérieure 7.i en contact avec le flux d'air extérieur et une paroi intérieure 8.i, non représentée sur la figure, qui forme le conduit par lequel est éjecté le flux F1 des gaz du moteur. Cette tuyère est essentiellement axisymétrique autour de l'axe XX' du turboréacteur et les sections extérieure et intérieure de la tuyère 1.i dans les plans transverses à l'axe XX' sont circulaires.

Le système d'inversion de poussée occupe la partie aval de la tuyère 1.i jusqu'au bord de sa section de sortie S.i. Dans l'exemple présenté, la poutre latérale 5.i, symétrique par rapport au plan horizontal P1 passant par l'axe XX', forme les parois de la tuyère sur une hauteur H1 de part et d'autre du plan axial horizontal P1, sensiblement constante sur son extension longitudinale. Cependant en aval, elle présente deux excroissances, 9.i et 10.i, qui s'écartent du plan horizontal P1 de telle sorte que le bord aval 11.i de la poutre latérale 5.i forme le bord aval de la tuyère 1.i sur sa section de sortie S.i, jusqu'à une hauteur H2 supérieure à H1. Sur l'exemple présenté, cette hauteur H2 représente environ 80% de la valeur du rayon R.i du bord de la section de sortie S.i de la tuyère, en général au moins égale aux deux tiers de ce rayon. La seconde poutre latérale 6.i, non représentée sur la figure 2 mais visible sur la figure 3, peut être la symétrique de la poutre 5.i par rapport au plan axial vertical P2 avec des excroissances 12.i et 13.i, et un bord aval 14.i.

En référence aux figures 2 et 3, les poutres latérales 5.i et 6.i soutiennent également des axes 15.i-16.i et leurs symétriques 17.i -18.i, visibles sur la figure 3, perpendiculaires au plan axial vertical P2, autour desquels les portes 3.i et 4.i pivotent. Sur la figure 2, on peut voir que les axes 15.i et 16.i de la poutre latérale 5.i sont situés à une distance D1 en amont du bord de la section de sortie S.i et à une distance du plan axial horizontal P1 sensiblement égale à la hauteur H1 de la poutre 5.i en amont des excroissances 9.i et 10.i.

Lorsque les portes 3.i et 4.i sont escamotées, en position fermée pour l'inverseur de poussée, leur paroi extérieure vient joindre celle des parois extérieures des poutres latérales, comme c'est représenté pour la poutre 5.i sur la figure 2, de manière à compléter la forme de la paroi extérieure de la tuyère 1.i. En particulier, une partie médiane 19a.i - 20a.i, du bord aval des portes 3.i - 4.i vient compléter les bords avals 11.i - 14.i des poutres latérales 5.i - 6.i, pour former le bord circulaire de la section de sortie S.i de la tuyère 1.i.

La paroi intérieure de la porte 3.i, respectivement 4.i, vient recouvrir la paroi intérieure de la poutre latérale 5.i le long d'une ligne 21.i, respectivement 22.i, située au-delà de la jointure au niveau des parois extérieures, dont la trace sur le plan axial vertical P2 est représentée en trait interrompu sur la figure 2. Ce recouvrement est effectué de manière symétrique sur la porte latérale 6i non représentée sur la figure. La forme de la paroi intérieure de la tuyère est donc déterminée jusqu'au bord de la section de sortie S.i par les parois intérieures des portes 3.i - 4.i et des poutres latérales 5.i - 6.i se rejoignant sur ces lignes 21.i et 22.i.

Par ailleurs, la courbe 21.i, par exemple, comporte une portion 19b.i qui rejoint la partie médiane 19a.i, et qui forme la partie latérale du bord aval de la porte 3.i. La trace de cette portion 19b.i sur le plan vertical P2 fait un angle A avec le plan de la section de sortie S.i. Cette partie latérale 19b.i se poursuit de manière symétrique par rapport au plan vertical P2 de l'autre côté de la partie médiane 19a.i sur la porte 3.i. De même, la partie latérale 20b.i est construite sur la porte 4.i par symétrie relativement au plan axial horizontal P1. La valeur de l'angle A que fait la trace d'une partie latérale, 19b.i ou 20b.i, dépend de la géométrie de la tuyère et de la position des axes de pivots 15.i - 16.i - 17.i - 18.i. Sur l'exemple présenté, cet angle vaut environ 30° et il est en tout état de cause inférieur à 40°. La position des axes de pivot, 15.i -16.i -17.i -18.i, et la valeur de l'angle A sont en particulier agencés pour que le système d'inversion de poussée vérifie la propriété décrite ci-après.

Lorsque l'inverseur est en position ouverte, en référence à la figure 3, les portes 3.i - 4.i pivotent autour des axes 15.i -17.i et 16.i - 18.i de telle sorte que leurs bords aval latéraux 19b.i - 20b.i se positionnent sur le plan axial horizontal P1. Les bords avals médians 19a.i - 20a.i des deux portes pivotantes 3.i - 4.i se rejoignent alors à leurs extrémités. En position déployée, les portes pivotantes 3.i et 4.i obstruent donc la sortie aval du canal formé par les deux poutres latérales 5.i et 6.i. Les bords latéraux aval 19b.i et 20b.i sont jointifs. Par contre, les bords aval médians 19a.i et 20a.i, ayant une forme en arc de cercle, laissent libre une ouverture résiduelle SF.i dont la trace sur un plan transverse a une forme lenticulaire. Heureusement, étant donné la hauteur H2 par rapport au plan axial transverse à laquelle démarrent les bords médians 19a.i et 20a.i, cette forme lenticulaire est très aplatie et la surface de sa projection dans un plan transverse représente une portion faible de la surface de la section de sortie S.i de la tuyère 1.i en fonctionnement de jet libre. En tout état de cause cette surface représente moins de 10% de la surface de la section de sortie S.i.

Par ailleurs, en se déployant, les portes 3.i et 4.i dégagent en amont des axes de pivot, 15.i - 16.i - 17.i - 18.i, une ouverture importante SP.i d'éjection vers l'amont entre les portes latérales 5.i et 6.i, dont la surface est dite section de puits. La partie du flux F1 se réfléchissant sur les portes 3.i et 4.i est donc majoritaire. La partie du flux s'échappant par la section de fuite SF.i représente moins de 10% du flux F1, ce qui permet d'obtenir de bonnes performances de contre-poussée avec ce système d'inversion de poussée.

Par ailleurs, les poutres latérales 5.i - 6.i sont fixées au corps du moteur dans la continuité de son capotage par une structure fixe 23.i, indiquée sur la figure 2, et le système d'inversion de poussée comporte des actionneurs pour faire pivoter les portes 3.i, 4.i, qui ne sont pas représentés sur les figures.

Un arrière corps selon l'invention est réalisé par exemple en modifiant la tuyère de référence 1.i près de son bord de section de sortie. Il est décrit ci-après en reprenant la même numérotation de ses éléments que pour l'arrière corps de référence sans l'indice .i.

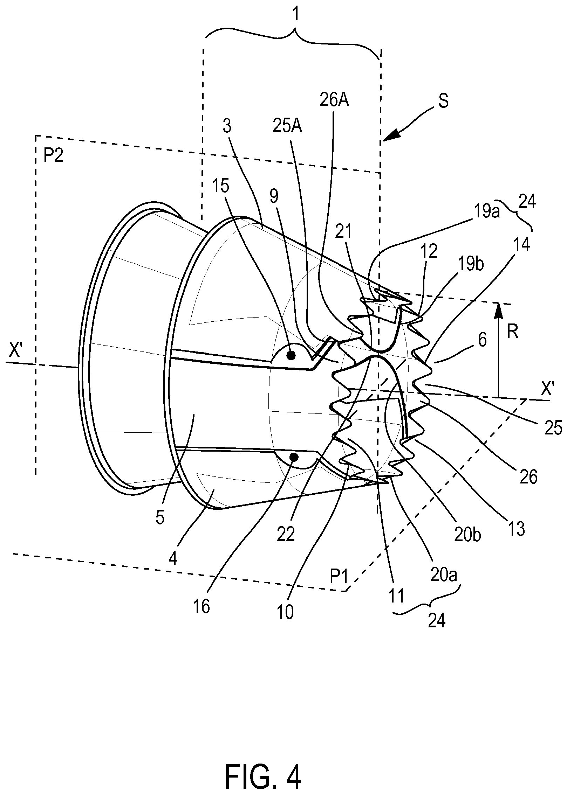

Un tel arrière corps, représenté sur la figure 4 avec le système d'inversion de poussée fermé, comporte donc des poutres latérales 5 et 6 réalisées avec, de la même manière, une partie longitudinale de hauteur moyenne H1 par rapport au plan axial horizontal et des excroissances 9-10-12-13 s'écartant en aval du plan axial horizontal.

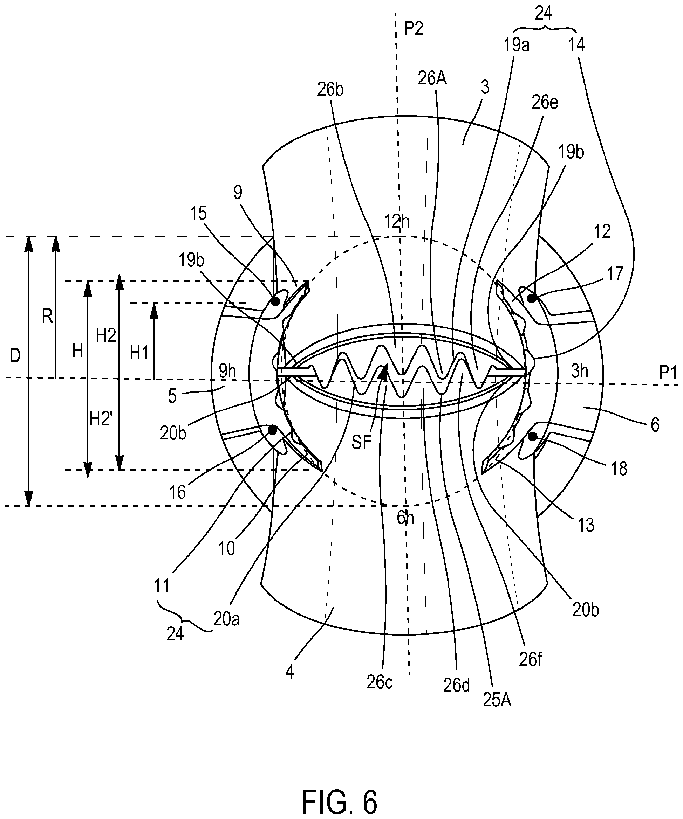

De la même façon, des axes de pivot 15- 16 et 17- 18, visibles sur la figure 6, perpendiculaires au plan axial vertical P2 sont installés sur ces poutres latérales 5 - 6. Les portes pivotantes 3 - 4 présentent également un bord latéral médian 19a - 20a, qui se raccorde au bord aval 11 - 14 de chaque poutre latérale 5 - 6 pour former le bord de sortie de la tuyère 1, dans la position escamotée des portes représentée sur la figure 4.

De même, comme c'est visible en partie sur la figure 4, la paroi interne des portes pivotantes 3 - 4 recouvre en partie les parois internes des poutres latérales 5 et 6 jusqu'à un limite formant la courbe 21 sur la porte supérieure 3 et 22 sur la porte inférieure 4. Pareillement, ces courbes 21 - 22 se terminent en aval par une partie 19b - 20b qui rejoint le bord médian 19a - 20a de chaque porte pivotante 3 - 4 pour en former le bord aval latéral de chaque côté. Les considérations concernant la forme des traces des ces bords latéraux aval 19b - 20b dans le plan vertical P2 ainsi que l'angle A qu'elles font avec un plan transverse à l'axe XX' sont les mêmes que pour la tuyère de référence 1.i.

Selon l'invention, en référence à la figure 4, le bord aval 24 de la tuyère 1, formé de la réunion des bords aval médians 19a - 20a des portes pivotantes et des bords avals 11 - 14 des poutres latérales 5 - 6, comporte des échancrures 25, prenant une forme sensiblement triangulaire arrondie sur ce bord aval. Les échancrures 25 définissent ainsi des chevrons antibruit 26 de forme également triangulaire arrondie, sur le bord de fuite 24 dans le prolongement de la tuyère 1. Bien entendu, les échancrures 25 et les chevrons 26 pourraient présenter toute autre forme appropriée (par exemple trapézoïdale).

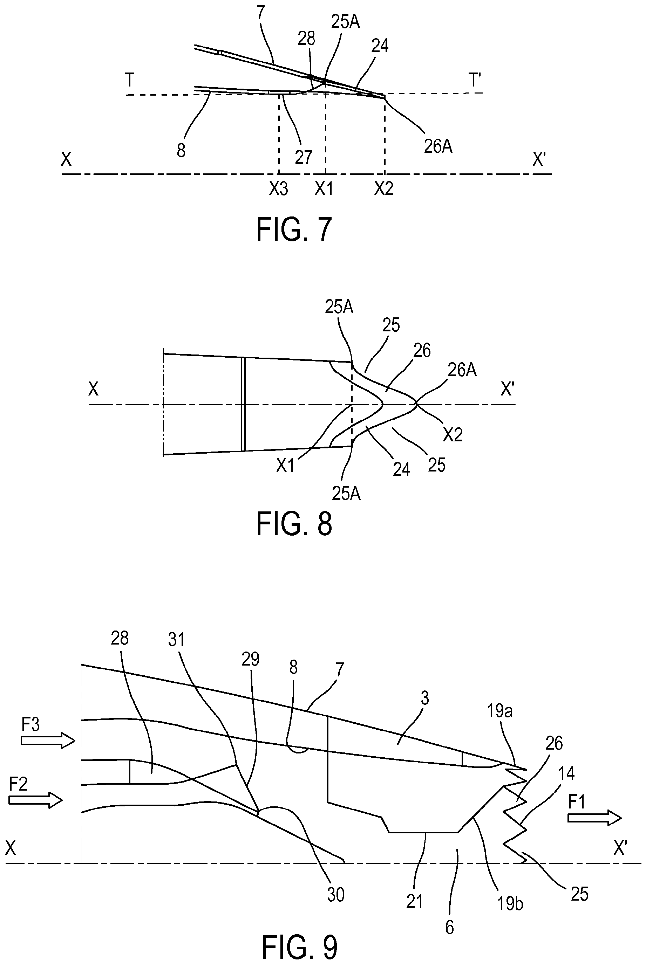

En référence à la figure 8, les échancrures 25, régulièrement espacées les unes des autres dans le sens circonférentiel (bien qu'il pourrait en être autrement), définies par un sommet 25A et les chevrons 26 définis par une pointe 26A, sont régulièrement espacés les uns des autres. En outre, bien qu'il puisse en être autrement, dans l'exemple de la figure 4, les échancrures 25 sont identiques entre elles. Il en est donc de même en ce qui concerne les chevrons 26.

Les sommets 25A des échancrures 25 ont une abscisse X1 sur l'axe XX' et les pointes 26A des chevrons 26 ont l'abscisse X2 du plan transverse définissant la fin de la tuyère 1.

En référence à la figure 7, selon un premier mode de réalisation des chevrons, le rayon de la section transversale de la paroi interne 8 de la tuyère 1 est circulaire jusqu'à une abscisse X3 qui correspond à un col où la surface de la section transversale de la veine passe par un minimum. La ligne 27, définissant la paroi interne 8 de la tuyère 1 en aval de l'abscisse X3 du col dans le plan axial passant par la pointe 26A d'un chevron, s'écarte radialement vers l'intérieur de la tangente TT' passant par le point de la paroi interne d'abscisse X3 au col, de telle sorte que la pointe 26A du chevron se trouve entre la tangente TT' et l'axe XX'. Ainsi, le chevron, notamment sa pointe 26A, pénètre dans l'écoulement interne.

La pénétration des chevrons est un paramètre important et va donc être pilotée par des paramètres géométriques tels que l'angle moyen de ladite ligne 27 et la différence entre l'abscisse X2 de la pointe 26A du chevron et l'abscisse X3 du col.

Cependant, cette pénétration a un effet négatif sur les performances opérationnelles de la tuyère 1 en diminuant la section efficace de sortie, notamment pour les régimes à faibles taux de détente. Sur l'exemple présenté en figure 7, le rayon du sommet 25A de l'échancrure 25 est plus important qu'au col, la ligne 28 définissant la paroi interne dans le plan axial passant par ce sommet s'écarte radialement vers l'extérieur de la tangente TT' au col. Des moyens connus permettent de donner à la paroi interne 8 de la tuyère une forme régulière, qui assure une continuité de tangente et minimise les points d'inflexion, en passant par le bord aval 24 ainsi que les lignes 27 et 28 précédemment décrites dans les plans axiaux passant par les sommets 25A des échancrures et les pointes 26A des chevrons Cela permet de compenser l'effet de fermeture dû à la pénétration des chevrons et d'augmenter la section efficace de sortie.

Dans l'exemple de la figure 7, la section transversale de la paroi interne 8 de la tuyère 1 n'est donc plus circulaire après l'abscisse X3 du col. D'autres modes de réalisation de la couronne de chevrons applicables à l'invention sont cependant envisageables. Par exemple, contrairement à l'exemple de la figure 7, l'épaisseur de la tuyère peut être plus faible, ou constante, au niveau de la couronne de chevrons. Dans ce cas, la forme de la paroi externe 7 suit celle de la paroi interne 8.

Dans un autre type de réalisation, la section de la paroi interne 8 peut rester circulaire dans un plan transversal après le col. Dans ce cas, la ligne 27 définissant la paroi interne dans le plan axial entre le col et la pointe 26A d'un chevron peut prendre une forme plus complexe, avec un point d'inflexion pour garder un effet d'ouverture de la section de sortie au niveau du sommet 25A des échancrures.

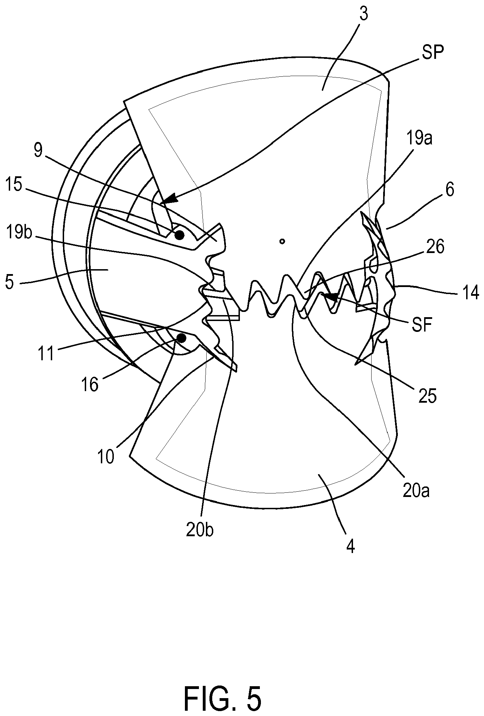

Partant de l'un des modes de réalisation évoqués ci-dessus pour la couronne de chevrons, la découpe du bord aval 24 entre le bord aval médian 19a - 20a d'une porte pivotante 3 - 4 et le bord aval 11 - 13 d'une poutre latérale 5 - 6 se fait nécessairement entre le sommet 25A d'une échancrure et la pointe 26A d'un chevron, comme c'est indiqué sur la figure 4 pour le bord aval supérieur de la poutre latérale 5. L'abscisse selon l'axe XX' de symétrie de ce point de raccord est donc comprise entre les abscisses X1 et X2. Cette abscisse correspond aussi à l'extrémité aval des bords latéraux 19b de la porte pivotante supérieure 3 et, de manière symétrique à l'extrémité aval des bords latéraux 20b de la porte pivotante inférieure 4. En référence aux considérations s'appuyant sur la figure 2, les paramètres géométriques du système d'inversion sont agencés par rapport à ce point de raccord et au rayon R moyen de la section de sortie S à cette abscisse, pour permettre aux bords médians 19a - 20a de se positionner près du plan axial horizontal lorsque les portes sont déployées, ainsi que c'est représenté sur la figure 5. Ces paramètres comprennent l'angle A que fait la trace du bord latéral 19b - 20b d'une porte pivotante dans le plan axial vertical et la position des axes de pivots 15 - 16 - 17 - 18. En particulier, le rapport de la hauteur H2 d'une excroissance 9 -10 - 12 -13 par rapport à ce rayon R moyen est en général, comme pour la tuyère de référence, au moins égal aux deux tiers du rayon R.

Cet agencement permet, en particulier, de conserver un angle d'ouverture des portes 3-4, ainsi qu'une section de puits SP proches de ceux de l'arrière corps avec la tuyère axisymétrique de référence 1 i.

Dans un mode de réalisation préféré, représenté sur les figures 4 à 6, la couronne de chevrons comporte un nombre impair de chevrons 26 régulièrement répartis. Il y a 19 chevrons sur l'exemple présenté mais des nombres impairs différents peuvent être envisagés.

De plus, la répartition des chevrons est symétrique par rapport au plan axial vertical P2, perpendiculaire à la direction des axes de pivots 15-16-17-18. Cette caractéristique implique, comme c'est représenté sur la figure 6, que les pointes 26A des chevrons du bord médian 19a de la porte supérieure 3 se trouvent en face des sommets 25A des échancrures du bord médian 20a de la porte inférieure 4 et vice-versa.

De la sorte, lorsque les portes pivotantes 3-4 sont déployées pour fermer le système d'inversion de poussée, ainsi que cela est représenté sur les figures 5 et 6, les chevrons 26 du bord médian 19a - 20a d'une porte pivotante 3 - 4 s'imbriquent dans les échancrures 25 du bord médian 20a -19a de la porte pivotante opposée 4 - 3. Cela diminue la limitation d'amplitude du pivot des portes 3 - 4 pour éviter le contact entre les bords médians opposés. De ce fait, la surface de l'ouverture résiduelle SF est maintenue dans une limite acceptable pour les performances de contre-poussée attendues du système.

Comme on peut le voir sur les figures 5 et 6, la trace sur un plan transverse de cette ouverture résiduelle SF n'est plus lenticulaire mais dentelée. De plus, le rapprochement des bords latéraux 19b et 20b n'est pas complet pour éviter le chevauchement des bords médians 19a - 20a.

Il faut noter cependant, que les formes des chevrons 26 et celles des échancrures 25 sont définies en correspondance de manière ce que leur imbrication limite au maximum cette ouverture résiduelle SF sur toute l'extension des bords médians 19a - 20a lorsque les portes pivotantes 4 - 3 sont déployées. De ce fait, comme on peut le voir sur la figure 6, la pointe 26A de chaque chevron 26 vient se placer à l'intérieur du sommet 25A de l'échancrure 25 correspondante sur la porte opposée, sans la dépasser et sans qu'il y ai de chevauchement des parties médianes des bords aval, lorsque les portes 3, 4, sont déployées.

A cet effet, comme on peut le voir sur la figure 6, la forme triangulaire à sommets arrondis des chevrons 25 et des échancrures 26, utilisée dans l'exemple présenté, permet de rapprocher de façon importante le bord d'un chevron 26A de celui de l'échancrure 25A opposée sans chevauchement des bords médians lorsque les portes sont déployées. Chaque chevron 26 comporte un sommet ou une pointe 26A arrondie convexe et chaque échancrure 25 comporte un sommet 25A arrondi concave.

Pour minimiser les effets d'extrémité, à proximité des poutres latérales 5-6, il est possible d'utiliser la configuration représentée sur les figures 5 à 6. Dans cet exemple, la découpe des chevrons, entre le bord aval 11-14 d'une poutre latérale 5 - 6 et le bord aval médian 19a - 20a d'une porte pivotante 3 - 4, se fait à proximité du sommet 25A d'une échancrure 25.

Toujours sur l'exemple considéré, le nombre de chevrons 26 étant impair, la découpe ne peut être symétrique entre la porte supérieure 3 et la porte inférieure 4. On voit par exemple, sur la figure 6, que le bord aval médian supérieur 19a compte cinq chevrons alors que le bord aval médian inférieur 20a n'en compte que quatre.

Dans cet exemple, cela entraîne le fait que les excroissances du bas 10 -13 sur les poutres latérales 5 - 6 se terminent à une distance H2' du plan axial horizontal qui est légèrement supérieure à la distance H2 à laquelle se terminent les excroissances du haut 9 -12, ainsi que cela est indiqué sur la figure 6. Par effet collatéral, les bords latéraux 20b de la porte pivotante 4 du bas sont légèrement plus longs que les bords latéraux 19b de la porte pivotante 3 du haut. Cela crée un décalage des bords médians 19a-20a qui permet de rapprocher un peu plus les bords latéraux 19b-20b et donc de diminuer l'extension de l'ouverture résiduelle SF.

On notera à ce propos, en référence que si la hauteur H2 - H2' de chaque excroissance du haut 9 - 12 et du bas 10 - 13 sur les portes latérales 5 - 6, reste au moins égale aux deux tiers du rayon R de la section moyenne de sortie S de la tuyère, indiquée en trait interrompu sur la figure 6, au niveau du raccord entre les bords aval (11, 14) des portes latérales et les bords aval médians (19a, 20a) des portes pivotantes, alors l'écart H entre les deux extrémités de chaque excroissance, égal à la somme de H2 et H2', est également au moins égal aux deux tiers du diamètre D de la section. Ce diamètre D représente également l'écartement maximum des bords avals médians (19a, 20a) des portes pivotantes (3, 4) dans cette section S.

Une variante de réalisation peut être utilisée en complément ou indépendamment. Elle consiste à différencier les chevrons en fonction de leur position azimutale sur les bords médians 19a-20a des portes pivotantes.

En effet, d'un côté les chevrons, tels que 26b - 26c - 26d représentés sur la figure 6, positionnés près du plan axial vertical P1 ne posent pas de difficulté particulière. Ces chevrons peuvent être dimensionnés pour optimiser leur effet antibruit. D'une part, ils viennent s'emboîter frontalement dans l'échancrure opposée, d'autre part, à cause du pourtour globalement circulaire du bord aval 24 de la tuyère, ils sont naturellement légèrement plus écartés que les autres lorsque les portes pivotantes 3 - 4 sont déployées. Il est donc facile, même avec une forte pénétration de dessiner le bord aval 24 pour qu'ils ne s'interpénètrent pas.

D'un autre côté, les chevrons, tels que 26e et 26f, situés aux extrémités latérales se retrouvent face à face avec une certaine incidence lorsque les portes 3 et 4 sont déployées. Ils limitent donc la fermeture de porte parce que la pointe d'un chevron, par exemple 26d, risque de venir, de manière oblique, au contact du chevron 26f.

Dans la variante considérée, il est donc envisageable de limiter les paramètres déterminant la pénétration du chevron 26d, soit en longueur soit en rayon terminal, soit les deux, pour éviter qu'il ne vienne frapper le chevron 26f. Il est également possible de modifier la forme de la ligne de bord aval 24 entre le chevron 26f et l'échancrure adjacente pour qu'il évite le chevron 26d.

De telles modifications, diminuent les performances antibruit des chevrons concernés. Dans une variante qui peut être utilisée en complément, il est alors possible de modifier le dessin des chevrons présents sur les bords avals 11 -14 des poutres latérales 5 - 6 pour augmenter leurs performances antibruit et compenser les pertes d'efficacité dues aux modifications opérées sur les chevrons, 26d - 26f, des bords aval médians 19a-20a des portes pivotantes. Grâce à la cinématique du système d'inversion de poussée, les chevrons des bords avals 11 - 14 des poutres latérales 5 - 6 restent éloignés des portes pivotantes 3 - 4 lorsqu'elles basculent. Aucune contrainte particulière ne leur est donc imposée par le système d'inversion de poussée. On peut donc en particulier augmenter leur pénétration pour améliorer les performances acoustiques antibruit.

L'invention a été présentée sur des exemples de répartitions essentiellement régulières en azimut des chevrons. Il est envisageable d'utiliser une couronne pour laquelle l'extension en azimut varie. Ce peut être utile par exemple, pour adapter la forme des chevrons 26d - 26f aux extrémités latérales des bords aval médians 19a - 20a. En poursuivant sur cette voie, une autre variante peut utiliser un nombre de chevrons pair, si par exemple, une dissymétrie du nombre de chevrons entre les bords aval 11-14 des poutres latérales compense la dissymétrie du nombre de chevrons entre les bords avals médians 19a-20a des portes pivotantes 3 - 4.

Par ailleurs, bien que la symétrie par rapport au plan axial vertical P2 optimise la fermeture de l'ouverture résiduelle SF, l'invention peut être appliquée même si cette symétrie ne peut être imposée, à condition qu'un chevron 26 d'un bord aval médian 19a-20b reste positionné en face d'une échancrure 25 du bord aval médian opposé 20a-19a. De plus, l'invention a été présentée par commodité avec des axes de rotation 15 - 16 -17 -18 des portes 3-4 horizontaux mais la géométrie de l'arrière corps peut être tournée d'un angle arbitraire autour de l'axe XX'.

De plus, ainsi que cela est très schématiquement indiqué sur la figure 9, un tel système d'inversion de poussée peut être installé sur un arrière corps de turboréacteur à flux mélangés. Dans ce cas, un mélangeur à lobes 28 peut être installé dans la tuyère 1 à la confluence entre un flux primaire F2 et un flux secondaire F3 avant le passage dans la partie où se trouve le système d'inversion de poussée équipée d'une couronne de chevrons selon l'invention.

En référence à la figure 9, le mélangeur à lobes 28 est une pièce profilée prolongeant, à l'intérieur de la tuyère 1, les parois séparant l'arrivée de flux primaire F2 et l'arrivée de flux secondaire F3. Il présente à son extrémité aval un bord de fuite 29 dont l'épaisseur est généralement faible pour éviter un effet de culot entre les deux flux. Le mélangeur à lobes 28 s'arrête généralement à une distance significative de l'extrémité aval de la tuyère 1 pour permettre au mélange de flux de s'homogénéiser en formant le flux F1 qui sort de la tuyère et qui sera dévié par les portes pivotantes 3 et 4 lorsqu'elles sont déployées.

Un exemple de mode de réalisation du mélangeur 6 est constitué avec des lobes symétriques, périodiques en azimut autour de l'axe XX' du turboréacteur. Sur cet exemple, la ligne de bord de fuite 29 a une forme tridimensionnelle ondulée en azimut et régulière qui passe périodiquement par un point bas 30 de rayon minimum et un point haut 31 de rayon maximum. La forme du mélangeur est préférentiellement obtenue en rejoignant cette ligne de bord de fuite 29 par des surfaces régulières lisses, d'un côté à la section circulaire de la paroi extérieure de l'arrivée de flux primaire F2, de l'autre côté à la section circulaire de la paroi intérieure de l'arrivée de flux secondaire F3. Des moyens connus permettent à l'homme du métier d'obtenir ces surfaces lisses en définissant des lois régulières de variation de rayon pour joindre les sections d'entrée au bord de fuite 29 du mélangeur à lobes 28.

Sur l'exemple considéré, les évolutions du bord de fuite 29 du mélangeur 28 sont périodiques. De cette manière, la surface moyenne entre la paroi radialement externe et la paroi radialement interne du mélangeur 28 fait des ondulations périodiques en azimut autour de l'axe XX' qui créent, du côté du flux primaire F2 des lobes divergents dits chauds, sous les points hauts 31 du bord de fuite 29, et du côté du flux secondaire F3 des lobes convergents dit froids, au dessus des points bas 30 du bord de fuite 29.

Il est connu de concevoir un mélangeur à lobes 28 selon cette configuration pour diminuer le bruit de jet de la tuyère 1, notamment aux basse fréquences. Cet effet peut se cumuler avec celui de chevrons antibruit. Cependant, pour éviter des interactions néfastes entre les deux dispositifs, notamment sur la partie hautes fréquences du spectre de bruit, il est préférable d'accorder la répartition des lobes du mélangeur 28 avec celle des chevrons antibruit.

Une mise en oeuvre préférée de l'invention en correspondance avec un mélangeur à lobes consiste à concevoir la couronne de chevrons 26 et le mélangeur à lobes 28 avec la même périodicité, en positionnant en azimut la pointe 26A des chevrons 26 au centre des lobes chauds du mélangeur 28, c'est-à-dire en face des points hauts 31 du bord de fuite 29 du mélangeur.

Dans le cas particulier de l'invention, c'est la géométrie de la couronne de chevrons 26 qui impose la répartition azimutale des lobes du mélangeur 28. Par exemple, dans l'exemple présenté sur les figures 4 à 6, le mélangeur 28 doit avoir 19 lobes chauds répartis régulièrement en azimut et, de préférence, un lobe chaud supérieur est centré sur le plan axial vertical P2 avec son point haut 31 situé derrière la pointe du chevron 26b situé au milieu du bord aval médian 19a de la porte pivotante supérieure 3.

## Revendications

1. Arrière corps de turboréacteur ayant un axe central (XX'), équipé d'une tuyère (1) comportant deux portes (3, 4) montées en vis-à-vis entre deux poutres latérales (5, 6) et pivotantes, autour d'axes (15, 16, 17, 18) définissant une direction de pivot, entre une position escamotée, dans laquelle une partie médiane (19a, 20a) du bord aval des dites portes (3, 4) forme le bord (24) de la section de sortie (S) de la tuyère (1) en association avec les bords aval (11, 14) des deux poutres latérales (5, 6), et une position déployée, dans laquelle lesdites parties médianes (19a, 20a) des bords aval des portes pivotantes (3, 4) se rejoignent pour obstruer le canal entre les deux poutres latérales (5, 6) en vue d'inverser la poussée des gaz du turboréacteur, le bord (24) de la section de sortie de la tuyère présentant en outre une couronne de chevrons antibruit (26) alternants avec des échancrures (25), agencée de telle sorte que chaque chevron antibruit (26) formé sur la partie médiane (19a, 20a) du bord aval d'une porte pivotante est face à une échancrure de la partie médiane (20a, 19a) de l'autre porte pivotante (4, 3) dans la direction perpendiculaire à ladite direction de pivot, ledit arrière corps étant **caractérisé en ce qu'**il est agencé de telle sorte que, lorsque les portes (3,4) sont en position déployée, les chevrons (26) d'une porte (3) s'imbriquent dans les échancrures (25) de la porte opposée (4) sans chevauchement des bords avals médians (19a, 20a) des portes.

2. Arrière corps de turboréacteur selon la revendication précédente dans lequel la découpe de la couronne de chevrons (26) entre les bords aval (11, 14) des poutres latérales (5,6) et la partie médiane (19a, 20a) du bord aval des portes pivotantes (3, 4) se fait à proximité du sommet (25A) d'une échancrure (25).

3. Arrière corps de turboréacteur selon l'une des revendications précédentes dans lequel le nombre de chevrons (26) de la couronne est impair.

4. Arrière corps de turboréacteur selon l'une des revendications précédentes dans lequel les chevrons (26) sur les portes sont symétriques par rapport au plan axial (P2) perpendiculaire à ladite direction de pivot.

5. Arrière corps de turboréacteur selon l'une des revendications précédentes, dans lequel les échancrures (25) et les chevrons antibruit (26) prennent une forme sensiblement triangulaire à sommets arrondis sur les bords avals (19a, 19b, 20a, 20b) des portes (3, 4).

6. Arrière corps de turboréacteur selon l'une des revendications précédentes, dans lequel la pénétration des chevrons (26) placés sur la partie médiane (19a, 20a) du bord aval des portes pivotantes (3, 4) diminue lorsqu'augmente leur distance au plan axial (P2) perpendiculaire à ladite direction de pivot.

7. Arrière corps de turboréacteur selon l'une des revendications précédentes dans lequel la géométrie des chevrons (26) placés les bords aval (11, 14) des deux poutres latérales (5, 6) diffère de celle des chevrons placés sur la partie médiane (19a, 20a) du bord aval des portes pivotantes (3, 4), de manière à rendre les chevrons placés sur les poutres latérales (5, 6) plus performants acoustiquement que les chevrons placés sur les portes pivotantes (3, 4).

8. Arrière corps de turboréacteur selon l'une des revendications précédentes dans lequel la distance (H) séparant les deux points de raccord du bord aval (11, 14) de chaque poutre latérale (5, 6) avec la partie médiane (19a, 20a) du bord aval des portes pivotantes (3, 4) est au moins égale aux deux tiers de l'écartement maximal (D) entre les parties médianes (19a, 20a) du bord aval des deux portes pivotantes (3, 4) dans le plan transverse à l'axe XX' passant par lesdits points de raccord.

9. Turboréacteur à flux mélangés comportant un arrière corps selon l'une des revendications précédentes.

10. Turboréacteur à flux mélangés selon la revendication précédente comportant en outre un mélangeur à lobes (28) à l'intérieur de la tuyère (1) dans lequel les lobes chauds sont de même nombre que les chevrons antibruit (26) et sont centrés en azimut sur lesdits chevrons (26).

## Patentansprüche

1. Hinterer Körper eines Turboluftstrahltriebwerks, der eine zentrale Achse (XX') hat und mit einer Düse (1) versehen ist, die zwei Türen (3, 4) umfasst, die einander zugewandt zwischen zwei seitlichen Trägern (5, 6) angebracht sind und um Achsen (15, 16, 17, 18) schwenkbar sind, die eine Schwenkrichtung zwischen einer eingefahrenen Position, in der ein mittlerer Abschnitt (19a, 20a) der stromabwärts gelegenen Kante der Türen (3, 4) den Rand (24) des Auslassabschnitts (S) der Düse (1) in Kombination mit den stromabwärts gelegenen Kanten (11, 14) der beiden seitlichen Träger (5, 6) bildet, und einer ausgefahrenen Position definieren, in der die mittleren Abschnitte (19a, 20a) der stromabwärts gelegenen Kanten der schwenkbare Tür en (3, 4) aufeinander treffen, um den Kanal zwischen den beiden seitlichen Trägern (5, 6) zur Umkehr der Schubkraft des Gases des Turboluftstrahltriebwerks zu versperren, wobei der Rand (24) des Auslassabschnittes von dieser Düse ferner einen Kranz mit Lärmschutzzacken (26) umfasst, die mit Ausnehmungen (25) alternieren, die so angeordnet sind, dass jeder Lärmschutzzacken (26), der auf dem mittleren Abschnitt (19a, 20a) der stromabwärts gelegenen Kante einer schwenkbaren Tür ausgebildet ist, einer Ausnehmung des mittleren Abschnitts (19a, 20a) der anderen schwenkbaren Tür (4, 3) in der Richtung, die senkrecht zu der Richtung der Drehachse ist, gegenüber liegt, wobei der hintere Körper **dadurch gekennzeichnet ist, dass** er so angeordnet ist, dass, während die Türen (3, 4) in der entfalteten Position sind, die Zacken (26) einer Tür (3) in die Ausnehmungen (25) der gegenüberliegenden Tür (4) ohne eine Überlappung der stromaufwärts gelegenen mittleren Kanten (19a, 20a) der Türen eingreifen.

2. Hinterer Körper eines Turboluftstrahltriebwerks nach dem vorhergehenden Anspruch, wobei der Ausschnitt der Kranzes mit Zacken (26) zwischen den stromabwärts gelegenen Kanten (11, 14) des seitlichen Trägers (5, 6) und dem mittleren Abschnitt (19a, 20a) der stromabwärts gelegenen Kante der schwenkbaren Türen (3, 4) in der Nähe der Spitze (25A) von einer Ausnehmung (25) liegt.

3. Hinterer Körper eines Turboluftstrahltriebwerks nach einem der vorhergehenden Ansprüche, wobei die Anzahl der Zacken (26) des Kranzes ungerade ist.

4. Hinterer Körper eines Turboluftstrahltriebwerks nach einem der vorhergehenden Ansprüche, wobei die Zacken (26) an den Türen bezüglich der Axialebene (P2) symmetrisch sind, die senkrecht zu der Richtung der Drehachse ist.

5. Hinterer Körper eines Turboluftstrahltriebwerks nach einem der vorhergehenden Ansprüche, wobei die Ausnehmungen (25) und die Lärmschutzzacken (26) eine im Wesentlichen dreieckige Form mit abgerundeten Ecken auf den stromabwärts gelegenen Kanten (19a, 19b, 20a, 20b) der Türen (3, 4) aufweisen.

6. Hinterer Körper eines Turboluftstrahltriebwerks nach einem der vorhergehenden Ansprüche, wobei sich die Penetration der Zacken (26), die sich an dem mittleren Abschnitt (19a, 20a) an der stromabwärts gelegenen Kante der schwenkbaren Türen (3, 4) befinden, sich verringern, solange sich ihr Abstand zu der axialen Ebene (P2), die senkrecht zu der Richtung der Drehachse ist, vergrößert.

7. Hinterer Körper eines Turboluftstrahltriebwerks nach einem der vorhergehenden Ansprüche, wobei die Geometrie der Zacken (26), die an den stromabwärts gelegenen Kanten (11, 14) der beiden seitlichen Träger (5, 6) angeordnet sind, sich von der Geometrie der Zacken unterscheidet, die an dem mittleren Abschnitt (19a, 20a) der stromabwärts gelegenen Kanten der schwenkbaren Türen (3, 4) angeordnet sind, um die Zacken, die an den seitlichen Trägern (5, 6) angeordnet sind, akustisch effizienter als die Zacken zu machen, die an den schwenkbaren Türen (3, 4) angeordnet sind.

8. Hinterer Körper eines Turboluftstrahltriebwerks nach einem der vorhergehenden Ansprüche, wobei der Abstand (H), der die beiden Verbindungspunkte der stromabwärts gelegenen Kanten (11, 14) von jedem seitlichen Träger (5, 6) durch den mittleren Abschnitt (19a, 20a) der stromabwärts gelegenen Kante der schwenkbare Türen (3, 4) trennt, mindestens gleich zwei Drittel des maximalen Abstand (D) zwischen den mittleren Abschnitten (19a, 20a) der stromabwärts gelegenen Kante der beiden schwenkbaren Türen (3, 4) in der Ebene quer zur Achse XX' ist, die durch die Verbindungspunkte läuft.

9. Turboluftstrahltriebwerk mit vermischten Strömen, das einen hinteren Körper nach einem der vorhergehenden Ansprüche umfasst.

10. Turboluftstrahltriebwerk mit vermischten Strömen nach dem vorhergehenden Anspruch, das ferner einen Mischer mit Lappen (28) innerhalb der Düse (1) umfasst, wobei die heißen Lappen die gleiche Anzahl wie die Lärmschutzzacken (26) haben und in Azimutrichtung auf den Zacken (26) zentriert sind.

## Claims

1. Afterbody of a turbojet engine having a central axis (XX'), which is equipped with an exhaust nozzle (1) comprising two doors (3, 4) which are mounted opposite one another between two lateral beams (5, 6), and pivot about shafts (15, 16, 17, 18) defining a pivot direction, between a retracted position, in which a middle portion (19a, 20a) of the downstream edge of said doors (3, 4) forms the edge (24) of the output portion (S) of the exhaust nozzle (1) in combination with the downstream edges (11, 14) of the two lateral beams (5, 6) and a deployed position, in which said middle portions (19a, 20a) of the downstream edges of the pivoting doors (3, 4) join together to block the channel between the two lateral beams (5, 6) in order to reverse the thrust of the gases from the turbojet engine, the edge (24) of the output portion of the exhaust nozzle further comprising a ring of noise-reduction chevrons (26) alternating with indentations (25), said ring being arranged in such a way that each noise-reduction chevron (26) formed on the middle portion (19a, 20a) of the downstream edge of a pivoting door is opposite an indentation in the middle portion (20a, 19a) of the other pivoting door (4, 3) in the direction which is perpendicular to said pivoting direction, said afterbody being **characterised in that** it is arranged in such a way that, when the doors (3, 4) are in the deployed position, the chevrons (26) of a door (3) interlock with the indentations (25) of the opposite door (4) without any overlapping of the middle downstream edges (19a, 20a) of the doors.

2. Afterbody of a turbojet engine according to the preceding claim, wherein the cutting out of the ring of chevrons (26) between the downstream edges (11, 14) of the lateral beams (5, 6) and the middle portion (19a, 20a) of the downstream edge of the pivoting doors (3, 4) is carried out close to the apex (25A) of an indentation (25).

3. Afterbody of a turbojet engine according to any of the preceding claims, wherein the number of chevrons (26) in the ring is odd.

4. Afterbody of a turbojet engine according any of the preceding claims, wherein the chevrons (26) on the doors are symmetrical with respect to the axial plane (P2) which is perpendicular to said pivoting direction.

5. Afterbody of a turbojet engine according to any of the preceding claims, wherein the indentations (25) and the noise-reduction chevrons (26) have a substantially triangular shape having rounded apexes on the downstream edges (19a, 19b, 20a, 20b) of the doors (3,4).

6. Afterbody of a turbojet engine according to any of the preceding claims, wherein the penetration of the chevrons (26) which are placed on the middle portion (19a, 20a) of the downstream edge of the pivoting doors (3, 4) decreases as the distance thereof from the axial plane (P2) which is perpendicular to said pivoting direction increases.

7. Afterbody of a turbojet engine according to any of the preceding claims, wherein the geometry of the chevrons (26) which are placed on the downstream edges (11, 14) of the two lateral beams (5, 6) differs from that of the chevrons placed on the middle portion (19a, 20a) of the downstream edge of the pivoting doors (3, 4) so as to improve the acoustic performance of the chevrons placed on the lateral beams (5, 6) by comparison with the chevrons placed on the pivoting doors (3, 4).

8. Afterbody of a turbojet engine according to any of the preceding claims, wherein the distance (H) separating the two points connecting the downstream edge (11, 14) of each lateral beam (5, 6) to the middle portion (19a, 20a) of the downstream edge of the pivoting doors (3, 4) is at least equal to two thirds of the maximum gap (D) between the middle portions (19a, 20a) of the downstream edge of the two pivoting doors (3, 4) in the plane which is transverse to the axis XX' which passes through said connection points.

9. Mixed-flow turbojet engine comprising an afterbody according to any of the preceding claims.

10. Mixed-flow turbojet engine according to the preceding claim, further comprising a lobed mixer (28) inside the exhaust nozzle (1), wherein the hot lobes are equal in number to the noise-reduction chevrons (26) and are centred in azimuth on said chevrons (26).
